Europäisches Patentamt

European Patent Office

Office européen des brevets

(11) Veröffentlichungsnummer: **0 235 513**
**B1**

(12) **EUROPÄISCHE PATENTSCHRIFT**

(45) Veröffentlichungstag der Patentschrift:
04.04.90

(51) Int. Cl.⁴: **C04B 24/38**

(21) Anmeldenummer: 87100495.8

(22) Anmeldetag: 16.01.87

(54) Alkalische Gipsmischung mit Guarderivaten.

(30) Priorität: 24.01.86 DE 3602151

(43) Veröffentlichungstag der Anmeldung:
09.09.87 Patentblatt 87/37

(45) Bekanntmachung des Hinweises auf die Patenterteilung:
04.04.90 Patentblatt 90/14

(84) Benannte Vertragsstaaten:
AT BE CH DE ES FR GB IT LI NL SE

(56) Entgegenhaltungen:
EP-A- 0 162 544
US-A- 4 028 127

(73) Patentinhaber: Henkel Kommanditgesellschaft auf
Aktien, Postfach 1100 Henkelstrasse 67,
D-4000 Düsseldorf-Holthausen(DE)

(72) Erfinder: Schweizer, Dieter, Dr., Achenbachstrasse 7,
D-4000 Düsseldorf 1(DE)
Erfinder: Engelskirchen, Konrad, Dr., Gonellastrasse 24,
D-4005 Meerbusch 3(DE)
Erfinder: Grünberger, Eberhard, Dr.,
Gustav-Mahler-Strasse 12, D-4010 Hilden(DE)

(74) Vertreter: Seiting, Günther, Dipl.-Ing. et al,
Patentanwälte von Kreisler, Seiting, Werner
Deichmannhaus am Hauptbahnhof, D-5000 Köln 1(DE)

## Beschreibung

Die Erfindung betrifft die Verwendung von ausgewählten Guarethern in speziellen mineralischen Bindemitteln, nämlich alkalischen Gipsmischungen zur Verbesserung des Wasserrückhaltevermögens. Die Eignung der Guarether ist durch ihre Herstellung nach einem speziellen Verfahren gegeben.

Gipsmischungen sind weit verbreitet: sie werden zum Innenausbau von Gebäuden verwendet und auch maschinell aufgetragen (Maschinenputz). Zur Erhöhung der Verarbeitungssicherheit ist es heute üblich, den Gipsmischungen wasserlösliche Polymere zur Verbesserung des Wasserrückhaltevermögens beizumengen. Aufgabe dieser Hilfsstoffe ist es, auf stark saugenden Untergründen einen Wasserverlust der Gipsmassen vor dem Abbinden zu vermeiden und damit einer ungenügenden Durchhärtung oder Rißbildung entgegenzutreten. Als wasserlösliche Polymere befinden sich hier hauptsächlich nichtionische Celluloseether, beispielsweise Methylcellulose, Methylhydroxyethylcellulose oder Methylhydroxypropylcellulose im Einsatz.

Im Vergleich zu Celluloseethern können Guarether als leichter herstellbar gelten. Es wurde daher bereits versucht, auf dem angesprochenen Arbeitsgebiet Celluloseether durch die günstigeren Guarether zu ersetzen. Wenngleich bereits allgemein vorgeschlagen wurde, Guarether in hydraulisch erhärtenden Bindemitteln und u.a. auch in Gipsmassen als Wasserretentionsmittel einzusetzen, so haben praktische Versuche doch gezeigt, daß in den technisch besonders wichtigen alkalischen Gipsmischungen - das sind Gipsmischungen, die einen mehr oder minder großen Anteil an Calciumhydroxyd enthalten - die nach bisher bekannten Herstellverfahren gewonnenen Guarether nicht das in der Praxis verlangte Wasserrückhaltevermögen erbringen.

In der US-Patentschrift 4 028 127 wird vorgeschlagen, Guarether in Gegenwart von Wasser und einem alkalischen Katalysator herzustellen, wobei zusätzlich wassermischbare organische Lösungsmittel wie Alkohole, insbesondere Isopropanol oder wassernichtmischbare organische Lösungsmittel, z.B. Kohlenwasserstoffe mit 5 - 10 C-Atomen, wie Heptan oder Hexan, verwendet werden. Die so hergestellten Guarether sind als solche in alkalischen Gipsmischungen noch nicht geeignet. Sie müssen in einem nachgeschalteten Reaktionsschritt bei pH 6 - 6,3 in einem wäßrigen Reaktionsmedium mit Glyoxal behandelt werden, um dann in Gipsmischungen eingesetzt werden zu können. Eine derartige Glyoxalbehandlung - chemisch eine Vernetzung der Guarderivate - ist jedoch aufwendig. Darüber hinaus bestehen weitere Wünsche nach einem höheren Wasserrückhaltevermögen.

Daneben wird in der genannten US-A 4 028 127 im Zusammenhang mit der Diskussion des Standes der Technik von der Verwendung von Hydroxyalkylguar als Wasserretentionsmittel in Stückgips (plaster of paris) aufgrund schlechter Ergebnisse abgeraten.

Aufgabe der Erfindung ist es daher, eine alkalische Gipsmischung bereitzustellen, die einen ohne weitere Vernetzungsreaktion hergestellten Guarether mit hinreichendem Wasserrückhaltevermögen enthält. Eine weitere Aufgabe der Erfindung besteht darin, eine alkalische Gipsmischung mit einem Guarderivat bereitzustellen, das in seinem Wasserrückhaltevermögen übliche Celluloseether übertrifft.

Gegenstand der Erfindung ist die Verwendung von nicht vernetzten Guarethern aus der Gruppe Alkylguar, Hydroxyalkylguar und/oder Alkylhydroxyalkylguar, die durch Alkalisieren von Guar mit wäßriger Natronlauge und Alkylieren mit Alkylhalogeniden und/oder Epoxyalkanen in einem mit Wasser mischbaren oder nicht mischbaren organischen Suspensionsmedium hergestellt worden sind, als Wasserretentionsmittel in stark alkalisch eingestellten Gipsmischungen.

Es hat sich überraschenderweise herausgestellt, daß die erfindungsgemäß eingesetzten, nach einem speziellen Verfahren hergestellten Guarether nur in Gipsmassen besondere Ergebnisse erbringen. In Zementmassen, die bekanntlich ebenfalls alkalisch sind, werden im Vergleich zu Celluloseethern unterdurchschnittliche, in der Praxis kaum verwertbare Ergebnisse erreicht.

Die erfindungsgemäß eingesetzten Guarether werden in Mengen von 0,05 - 2 Gew.-%, vorzugsweise von 0,1 - 1 Gew.-%, bezogen auf trockene Gipsmischung, eingesetzt. Vielfach werden günstige Ergebnisse mit 0,2 - 0,5 Gew.-% erreicht.

Unter Guarethern werden hier hauptsächlich Alkylether mit unverzweigten Alkylsubstituenten der Kettenlänge $C_1$ - $C_4$ sowie Hydroxyalkylether mit substituierten Alkylsubstituenten der Kettenlänge $C_2$ - $C_4$, die eine primäre oder sekundäre OH-Gruppe enthalten, verstanden. Weiterhin fallen Mischether darunter, die mehr als 1 Art der oben genannten Substituenten aufweisen. Bevorzugte Guarether sind Methylguar, Ethylguar, Propylguar, Hydroxyethylguar und Hydroxypropylguar. Als Mischether können vorzugsweise eingesetzt werden Methylhydroxyethylguar, Methylhydroxypropylguar, Ethylhydroxyethylguar, Ethylhydroxypropylguar sowie andere aus den oben genannten Alkylierungsmitteln aufbaubaren binären und ternären Mischether.

Die Auswahl der geeigneten Guarether ist durch das Herstellverfahren gegeben. Guar wird als lufttrockenes Mehl in einem Wasser mischbaren, vorzugsweise alkoholischen Suspensionsmedium wie tert. Butanol oder einem aromatischen Suspensionsmedium, vorzugsweise Toluol, suspendiert und mit einer langsam zugegebenen wäßrigen Alkalihydroxidlösung, deren Konzentration vorzugsweise mehr als 5 Gew.-% beträgt, alkalisiert.

Dabei ist die Alkalisierungstemperatur wenig kritisch, d.h. es kann zwischen 0 und 100°C alkalisiert werden. Die Menge des Alkalisierungsmittels, welches vorzugsweise Natronlauge ist, richtet sich bei den Alkylethern nach dem gewünschten Substitutionsgrad. So werden beispielsweise bei der Herstellung von Methylguar mit einem Substitutionsgrad (DS) von 0,5 Ethergruppen pro Anhydroglucoseeinheit (AGU) pro mol AGU und pro mol Veretherungsmittel 0,75 mol Natronlauge eingesetzt, wobei jedoch auch höhere oder geringere Veretherungsmittelmengen im Bereich von 0,6 bis zu mehr als 1 mol brauchbar sind.

Das alkalisierte Guarmehl wird sodann in einem zweiten Reaktionsschritt verethert. Dabei wird zur Herstellung von Alkylguarderivaten vorzugsweise mit Alkylhalogeniden gearbeitet. Zwar sind Alkyljodide und Alkylbromide sowie Dialkalsulfate sehr gute Veretherungsmittel, doch werden in der Praxis vielfach die Alkylchloride bevorzugt. Häufige Veretherungsmittel sind daher Methylchlorid, Ethylchlorid sowie die isomeren Propyl- und Butylchloride. Zur Herstellung von Hydroxyalkylderivaten verethert man vorzugsweise mit Epoxiden, insbesondere mit Ethylenoxid, Propylenoxid oder den Butenoxiden. Die Veretherungsreaktion wird bei Temperaturen von 40 - 140°C, vorzugsweise unter dem Eigendruck des Systems, im geschlossenen Gefäß durchgeführt. Dabei richtet sich die Menge an eingesetztem Veretherungsmittel nach dem angestrebten Substitutionsgrad. Hierbei hat der Fachmann zu berücksichtigen, daß das eingesetzte Veretherungsmittel sich nicht vollständig an das Polymere anlagert, sondern daß die Substitutionsausbeute, bezogen auf eingesetztes Veretherungsmittel, üblicherweise im Bereich von 40 - 80 % anzusiedeln ist.

Bei der Herstellung von Guarmischethern können die Veretherungsmittel als Mischung eingesetzt werden. Es ist jedoch auch möglich, zunächst mit einem Alkylhalogenid oder mit mehreren Alkylhalogeniden und dann mit einem Epoxid oder einer Epoxidmischung umzusetzen. Auch eine Veretherung in umgekehrter Reihenfolge führt zum Erfolg. Bei der Alkalisierung ist zu beachten, daß die Menge an Alkalisierungsmittel bei Alkylierung mit Epoxiden im Vergleich zur Alkylierungsreaktion mit Alkylhalogeniden deutlich gesenkt werden kann. So kann eine Hydroxyalkylierung bereits mit 1 - 20 mol-%, vorzugsweise 5 - 15 mol-%, Alkalihydroxyd pro mol AGU durchgeführt werden.

Die nach dem beschriebenen Verfahren hergestellten Guarether enthalten als Beimengen Reststoffe von der Veretherung, insbesondere Salze. So tritt bei der Herstellung von Methylguar mit Methylchlorid in Gegenwart von NaOH Kochsalz als Nebenprodukt auf. Für den erfindungsgemäßen Einsatz in Gipsmassen sind diese Beimengungen, zumindest bei den Hydroxyalkylguarderivaten, unerheblich und brauchen daher bei diesen nicht entfernt zu werden.

Die in den erfindungsgemäßen Gipsmischungen eingesetzten Guarether haben, soweit sie Alkylgruppen tragen, einen mittleren Alkylsubstitutionsgrad (Anzahl der im Mittel pro Anhydroglucoseeinheit vorhandenen Alkylgruppen) DS von 0,1 - 1,5. Im allgemeinen werden Produkte mit günstigen Eigenschaften erhalten, wenn der mittlere Substitutionsgrad 0,3 - 1,5 beträgt.

Neben oder anstelle des genannten Alkylsubstitutionsgrads können die erfindungsgemäß eingesetzten Guarether auch noch einen molaren Substitutionsgrad an Hydroxyalkylsubstituenten haben. Der molare Substitutionsgrad gibt an, wieviel Mole der zur Hydroxyalkylierung eingesetzten Epoxide pro mol Anhydroglucoseeinheiten an das Polymere gebunden sind, ohne daß dabei berücksichtigt wird, ob längere Polyetherseitenketten vorliegen oder ob die freien Hydroxylgruppen des Polymergerüstes gleichmäßig substituiert sind. Der molare Substitutionsgrad MS kann 0,01 - 5, vorzugsweise 0,2 - 1, betragen. Dabei ist es bevorzugt, daß Produkte mit einem molaren Substitutionsgrad kleiner 0,3 und insbesondere kleiner 0,2, noch einen Alkylsubstitutionsgrad aufweisen.

Die bisher besten Ergebnisse wurden erhalten mit Gipsmassen, die Hydroxypropylguar eines MS von 0,4 - 0,7 oder Hydroxyethylguar eines MS von 0,3 - 0,7, fernerhin Methylguar des DS 0,4 - 1,2 enthielten.

Die in den erfindungsgemäßen Gipsmischungen eingesetzten Guarether lassen sich weiterhin durch die Viskosität ihrer wäßrigen Lösungen charakterisieren. So beträgt die Viskosität 2 gew.-%iger wäßriger Lösungen, gemessen mit einem Brookfield-Rotationsviskosimeter, Typ RVT bei 20 min⁻¹ (UpM) und 20°C, vorzugsweise 4 - 40 und insbesondere 5 - 25 Pas.

Wichtigste Eigenschaft der erfindungsgemäß eingesetzten Guarether ist ihr Wasserrückhaltevermögen in Gipsputz. Das Wasserrückhaltevermögen wird wie folgt bestimmt:

Zu 500 g Wasser Gipsgrundmischung werden 0,2 Gew.-% Guarderivat zugegeben. Die so hergestellte Mischung wird innerhalb von 10 Sekunden in 275 ml Leitungswasser (16 ° deutscher Härte) von 20°C eingerührt und dann 20 Sekunden mit einem elektrischen Handmixer bei mittlerer Geschwindigkeit weiter gerührt.

Zur Bestimmung des Wasserrückhaltevermögens wird ein Plastikring mit einem Innendurchmesser von 90 mm und einer Höhe von 15 mm verwendet, der auf einem Zellstoffkarton (Ø 110 mm, Fa. Schleicher und Schüll, Nr. 2294) aufliegt; zwischen Plastikring und Zellstoffkarton befindet sich Trennpapier (Ø 110 mm, Fa. Schleicher und Schüll, Nr. 0988). Für den eigentlichen Meßvorgang werden ca. 150 g Maschinenputz direkt nach dem oben beschriebenen Anrühren innerhalb von 5 Sekunden in den Plastikring eingefüllt, die überstehende Gipsmenge wird mit einem Spachtel abgestreift und die im Ring befindliche Menge durch Auswaage genau bestimmt. Innerhalb der Saugzeit von 3 Minuten zieht der Zellstoffkarton Wasser aus der Putzmasse ab, die genaue Menge wird durch Rückwägung des feuchten Kartons bestimmt. Das Trennpapier dient nur zu dem Zweck, nach 3 Minuten Saugzeit den Gips besser vom Karton abnehmen zu können. Als Wasserückhaltevermögen wird definiert

$$\% \ WRV \ = \ 100 \ - \ \left[ \frac{100A \cdot (1 + \frac{W}{F})}{\frac{W}{F} \cdot B} \right]$$

A = Wasseraufnahme des Zellstoffkartons in g

$\frac{W}{F}$ = Wasser/Feststoff-Faktor, in allen Beispielen 0,55

B = In den Ring eingefüllte Mörtelmenge in g

Ein hohes Wasserrückhaltevermögen bedeutet, daß dem Gips genügend Anmachwasser zum Abbinden zur Verfügung steht.

Das Wasserrückhaltevermögen der in den erfindungsgemäßen Gipsmischungen eingesetzten Guarderivate liegt in Abhängigkeit von der Zusatzmenge über 80 % und insbesondere über 90 %.

Die erfindungsgemäßen Gipsmischungen enthalten als Hauptbestandteil eine alkalisch eingestellte Gipskomponente. Dabei kann es sich um einen mit Calciumhydroxid versetzten handelsüblichen Gips, wie er als Grundlage für einen Maschinenputz verwendet wird, handeln oder um einen alkalischen Stuckgips. Chemisch besteht die Gipskomponente, zumindest überwiegend aus Calciumsulfat-Halbhydrat. Als Alkalisierungsmittel sind vorzugsweise 1 - 30 Gew.-% Calciumhydroxid oder Calciumoxid vorhanden. Neben oder anstelle von Calciumhydroxid kann auch Natriumhydroxid als Alkalisierungskomponente eingesetzt werden. Unter Calciumsulfat-Halbhydrat werden hier die einzelnen Kristallmodifikationen dieser Komponente oder deren Mischungen verstanden. Als weitere Bestandteile kann die Gipskomponente auch Anhydrid (Calciumsulfat) oder Gipsstein (Calciumsulfatdihydrat) in untergeordneten Mengen enthalten.

Die erfindungsgemäßen Gipsmischungen können weiterhin Hilfsstoffe und/oder Modifizierungsmittel enthalten. Als Modifizierungsmittel können beispielsweise Luftporenbildner, Quellmittel, Füllstoffe oder Leichtzuschlagsstoffe verwendet werden. Übliche Hilfsmittel sind insbesondere die Verarbeitungshilfsmittel, wie z.B. Verzögerer oder Beschleuniger. Als Verzögerer finden vielfach organische Säuren, wie beispielsweise Weinsäure Verwendung. Darüber hinaus gilt hier das allgemeine Fachwissen auf diesem Arbeitsgebiet.

Die erfindungsgemäßen Gipsmischungen können darüber hinaus noch weitere Wasserretentionsmittel enthalten, so die üblichen Wasserretentionsmittel auf Basis von Celluloseethern, insbesondere auf Basis von Alkylcellulosen und Hydroxyalkylcellulosen und/oder Alkylhydroxyalkylcellulosen. So können Methylcellulose, Methylhydroxyethylcellulose und/oder Methylhydroxypropylcellulose mitverwendet werden. Dabei gilt, daß die Gesamtmenge der Wasserretentionsmittel, also erfindungsgemäß eingesetzte Guarderivate und Cellulosederivate 2 Gew.-%, bezogen auf trockene Gipsmischung, nicht übersteigt. Weiterhin soll die Menge an Cellulosederivaten höchstens 80 %, vorzugsweise höchstens 50 % und insbesondere höchstens 20 % des Gesamtwasserretentionsmittels ausmachen.

## Beispiele

Die folgenden erfindungsgemäß eingesetzten Produkte 1 - 6 und die Vergleichsprodukte auf Cellulosebasis 7 - 9 wurden in Gipsmassen untersucht:

4

Tabelle 1

| Prod. | chem. Basis | MS | DS | Visk.[1) ] 2%ig mPas |
|-------|-------------|------|------|------------|
| 1. | Hydroxypropylguar | 0,43 | – | 15.600 |
| 2. | Hydroxypropylguar | 0,63 | – | 7.400 |
| 3. | Hydroxyethylguar, gereinigt | 0,41 | – | 32.000 |
| 4. | Hydroxyethylguar, salzhaltig | 0,41 | – | 24.000 |
| 5. | Methylguar | – | 0,45 | 15.700 |
| 6. | Methylhydroxypropylguar | 0,1 | 1,0 | 6.000 |
| 7. | Methylcellulose | – | 1,7 | 8.000 |
| 8. | Methylhydroxyethylcellulose | 0,18 | 1,6 | 15.000 |
| 9. | Methylhydroxypropylcellulose | 0,1 | 1,7 | 20.000 |

[1)] gemessen mit Brookfieldviskosimeter Modell RVT, Spindel 6 bei 20 Umdrehungen pro Minute.

Bei den Vergleichsprodukten handelt es sich um im Handel befindliche Cellulosederivate. Die Hydroxyalkylguarderivate (Produkt 1 bis Produkt 4) wurden wie folgt hergestellt:

Beispiel 1 Hydroxypropylguar (HPG, MS = 0,43)

Zu der Suspension von 92 g lufttrockenem Guarmehl (0,5 mol, atro) in 800 g Toluol wurden unter intensivem Rühren in einer Stickstoff-Atmosphäre 40 g 10 gew.-%ige wäßrige Natronlauge innerhalb von 5 Minuten zugetropft. 5 Minuten wurde nachgerührt. Die Suspension des alkalisierten Guarmehls wurde in einen Rührautoklaven überführt, in den nach mehrfachem Spülen mit Stickstoff 58 g Propylenoxid (1 mol) eingedrückt wurden. Das Reaktionsgemisch wurde auf 80°C aufgeheizt und 3 Stunden bei dieser Temperatur gerührt.

Nach Abkühlen auf Raumtemperatur wurde der Autoklav entleert. Nach Neutralisation der Suspension mit Salzsäure wurde das Guarderivat abfiltriert, mehrfach mit 70 - 80 gew.-%igem wäßrigen Aceton gewaschen und im Vakuumtrockenschrank bei 70°C getrocknet.

Erhalten wurden 90 g eines Produktes, das einen Substitutionsgrad (MS) von 0,43 und eine Lösungsviskosität von 15600 mPa ·s (2 gew.-%ig, Wasser, Brookfield) hatte.

Beispiel 2 (HPG; MS = 0,63)

Die Herstellung des Produktes 2 erfolgte analog der des Produktes 1 unter Einsatz von 87 g (1,5 mol) Propylenoxid.

Erhalten wurden ca. 92 g Hydroxypropylguar mit einem Substitutionsgrad (MS) von 0,63 und einer Lösungsviskosität von 7400 mPa ·s (2 gew.-%ig, Wasser, Brookfield).

Beispiel 3 Hydroxyethylguar (HEG, gereinigt; MS = 0,41)

184 g lufttrockenes Guarmehl (1 mol, atro) wurden in 1000 g tert.-Butanol suspendiert. Zu der resultierenden Suspension wurden in einer Stickstoff-Atmosphäre unter intensivem Rühren 80 g 10 gew.-%ige wäßrige Natronlauge innerhalb von 5 Minuten zugegeben. 5 Minuten wurde nachgerührt. Die Suspension wurde anschließend in einen Rührautoklaven überführt, in den nach Verdrängen des Luftsauerstoffs mit Stickstoff 26,4 g Ethylenoxid (0,6 mol) gedrückt wurden. Das Reaktionsgemisch wurde jeweils 1 Stunde bei 60°C und 70°C und 2 Stunden bei 80°C gerührt.

Nach Abkühlen auf Raumtemperatur wurde der Autoklav entleert. Die Suspension wurde mit Salzsäure neutralisiert. Das Guarderivat wurde abfiltriert, mehrfach mit 70 gew.-%igem wäßrigen tert.-Butanol gewaschen und im Vakuumtrockenschrank bei 70°C getrocknet.

Erhalten wurden ca. 180 g Hydroxyethylguar mit einem Substitutionsgrad von 0,41 und einer Lösungsviskosität von 32000 mPa ·s (2 gew.-%ig, Wasser, Brookfield).

Beispiel 4 (HEG, salzhaltig; MS = 0,41)

Die Herstellung des Produktes 4 erfolgte weitgehend analog der des Produktes 5 mit dem Unterschied, daß auf die Reinigung des Hydroxyethylguars durch Waschen mit wäßrigem tert.-Butanol verzichtet wurde.

Erhalten wurden ca. 190 g eines Produktes, das einen Salzgehalt von 3,2 Gew.-%, einen Substitutionsgrad (MS) von 0,41 und eine Lösungsviskosität von 24000 mPa ·s (2 gew.-%ig, Wasser, Brookfield) hatte.

Das Produkt 5 wurde wie folgt hergestellt:

Beispiel 5 (Methylguar (MG: DS = 0,45)

184 g lufttrockenes Guarmehl (1 mol) wurden in 800 g Toluol suspendiert und unter intensivem Rühren in einer Stickstoff-Atmosphäre innerhalb 5 Minuten tropfenweise mit 60 g 50 gew.-%iger wäßriger Natronlauge (0,75 mol) versetzt. 5 Minuten wurde nachgerührt. Anschließend wurde die Suspension in einen Autoklaven überführt, in den nach mehrfacher Spülung mit Stickstoff 50,5 g Methylchlorid (1 mol) eingedrückt wurden. Das Reaktionsgemisch wurde auf 90°C aufgeheizt und 4 Stunden bei dieser Temperatur gerührt.

Nach Abkühlen auf Raumtemperatur wurde der Autoklav entleert. Die Methylguar-Suspension wurde mit Salzsäure neutralisiert. Das Guarderivat wurde abfiltriert, mehrfach mit 60 - 70 gew.-%igem wäßrigen Aceton gewaschen und im Vakuumtrockenschrank getrocknet.

Erhalten wurden ca. 165 g eines Produktes mit einem Substitutionsgrad von 0,45, der einer ca. 60 %igen Substitutionsausbeute, bezogen auf umgesetztes Methylchlorid, entsprach und einer Lösungsviskosität von ca. 16000 mPa·s (2 gew.-%ig, Wasser, Brookfield).

Beispiel 6 Methylhydroxypropylguar (MHPG: DS = 1.0: MS = 0.1)

In analoger Weise wurde Produkt 6 hergestellt. Die Menge an Veretherungsmittel betrug 2 mol Methylchlorid pro mol Guar. Zur Alkalisierung waren eingesetzt worden 1,5 mol NaOH pro mol Guar.

Beispiel 7

Bestimmung des Wasserrückhaltevermögens (WRV) bei 50°C

In 500g Gipsputz wurden 0,2 Gew.-% an Guarderivaten zugemischt. Diese Mischung wurde mindestens 4 Stunden bei 50°C temperiert ebenso wie die 275 ml Anmachwasser. Der weitere Verlauf der Messung ist identisch mit dem Vorgehen bei der bereits beschriebenen Bestimmungsmethode bei 20°C.

Beispiel 8

Durch Mischung der folgenden Bestandteile wurden Putzmassen folgender Zusammensetzung hergestellt:

475 g handelsüblicher Gips für Maschinenputz
25 g Kalkhydrat
0,5 g Weinsäure
1 g Guarderivate bzw. Vergleichsprodukte
Die erhaltenen Werte für das Wasserrückhaltevermögen sind in Tabelle 2 zusammengefaßt.

Tabelle 2

| Produkt-Nr. | Typ | WRV bei 20°C | bei 50°C |
|---|---|---|---|
| 1 | HPG | 95,5 | 96,7 |
| 2 | HPG | 96,6 | 95,8 |
| 7 | MC | 94,8 | 79,8 |
| 8 | MHPC | 97,9 | 85,4 |

Beispiel 9 Bestimmung des WRV von Guarethern in Stuckgips-Massen 500 g Stuckgips, alkalisch
0,5 g Verzögerer (Weinsäure)
1,0 g Guarderivat bzw. Vergleichsprodukte

Die erhaltenen Werte für das Wasserrückhaltevermögen sind in Tabelle 3 zusammengefaßt.

Tabelle 3

| Produkt- | | WRV | |
|---|---|---|---|
| Nr. | Typ | bei 20°C | bei 50°C |
| 3 | HEG | 98,1 | 98,4 |
| 4 | HEG | 97,5 | 97,6 |
| 5 | MG | 97,6 | 98,2 |
| 6 | MHPG | 96,8 | 97,7 |
| 7 | MC | 95,1 | 84,9 |
| 8 | MHEC | 97,2 | 88,2 |
| 9 | MHPC | 97,9 | 87,3 |

Die Versuche zeigen das überlegene Wasserrückhaltevermögen der Guarether, insbesondere bei höheren Temperaturen.

**Patentansprüche**

1. Verwendung von nicht vernetzten Guarethern aus der Gruppe Alkylguar, Hydroxyalkylguar und/oder Alkylhydroxyalkylguar, die durch Alkalisieren von Guar mit wäßriger Natronlauge und Alkylieren mit Alkylhalogeniden und/oder Epoxyalkanen in einem mit Wasser mischbaren oder nicht mischbaren organischen Suspensionsmedium hergestellt worden sind, als Wasserretentionsmittel in stark alkalisch eingestellten Gipsmischungen.

2. Ausführungsform nach Anspruch 1, dadurch gekennzeichnet, daß die Guarether in Mengen von 0,05 - 2, vorzugsweise von 0,1 - 1 und insbesondere von 0,2 - 0,5 Gew.-%, bezogen auf trockene Gipsmischung, in Gipsmischungen eingesetzt werden.

3. Ausführungsform nach den Ansprüchen 1 - 2, dadurch gekennzeichnet, daß als Guarether Methylguar, Ethylguar, Propylguar, Hydroxyethylguar, Hydroxypropylguar, Hydroxybutylguar und/oder Mischether derselben eingesetzt werden.

4. Ausführungsform nach den Ansprüchen 1 - 3, dadurch gekennzeichnet, daß der durchschnittliche Substitutionsgrad der Alkylguarether oder Alkylhydroxyalkylguarether 0,1 - 1.5, vorzugsweise 0,3 - 1,5 beträgt.

5. Ausführungsform nach den Ansprüchen 1 - 4, dadurch gekennzeichnet, daß der molare Substitutionsgrad der Hydroxyalkylguarether oder der Hydroxyalkyl-alkylguarether 0,01 - 5, insbesondere 0,2 - 1 beträgt.

6. Ausführungsform nach den Ansprüchen 1 - 5, dadurch gekennzeichnet, daß die Viskosität der Guarether in 2 gew.-%iger wäßriger Lösung, gemessen mit einem Brookfield-Rotationsviskosimeter, Typ RVT, bei 20 Drehungen pro Minute und 20°C 4 bis 40 Pas, vorzugsweise 5 - 35 Pas beträgt.

7. Ausführungsform nach den Ansprüchen 1 - 6, dadurch gekennzeichnet, daß das Wasserrückhaltevermögen (WRV), berechnet nach der Formel

$$\% \ WRV \ = \ 100 \ - \ \left[ \frac{100A \ \cdot \ (1 + \frac{W}{F})}{\frac{W}{F} \ \cdot \ B} \right]$$

mehr als 80 %, insbesondere mehr als 90 % beträgt.

8. Ausführungsform nach den Ansprüchen 1 - 7, dadurch gekennzeichnet, daß die Guarether durch Alkalisierung und Verethern von Guar in Toluol hergestellt worden sind.

**Claims**

1. The use of uncrosslinked guar ethers from the group comprising alkyl guar, hydroxyalkyl guar and/or alkylhydroxyalkyl guar, which habe been obtained by alkalization of guar with aqueous sodium hydroxide and alkylation with alkylhalides and/or epoxyalkanes in a water-miscible or water-immiscible organic suspension medium, as water retention agents in strongly alkaline gypsum mixtures.

2. The use claimed in claim 1, characterized in that the guar ethers are used in gypsum mixtures in quantities of from 0.05 to 2% by weight, preferably in quantities of from 0.1 to 1% by weight and more preferably in quantities of from 0.2 to 0.5% by weight, based on the dry gypsum mixture.

3. The use claimed in claims 1 and 2, characterized in that methyl guar, ethyl guar, propyl guar, hydroxyethyl guar, hydroxypropyl guar, hydroxybutyl guar and/or mixed ethers thereof are used as the guar ethers.

4. The use claimed in claims 1 to 3, characterized in that the average degree of substitution of the alkyl guar ethers or alkylhydroxyalkyl guar ethers is from 0.1 to 1.5 and preferably from 0.3 to 1.5.

5. The use claimed in claims 1 to 4, characterized in that the molar degree of substitution of the hydroxyalkyl guar ethers or of the hydroxyalkylalkyl guar ethers is from 0.01 to 5 and more especially from 0.2 to 1.

6. The use claimed in claims 1 to 5, characterized in that the viscosity of the guar ethers in 2% by weight aqueous solution, as measured with a Brookfield type RVT rotational viscosimeter at 20 r.p.m./20°C, is from 4 to 40 Pas and preferably from 5 to 35 Pas.

7. The use claimed in claims 1 to 6, characterized in that the water retention capacity (WRC), calculated in accordance with the following formula

$$\% \ WRC = 100 - \left[ \frac{100A \cdot (1 + \frac{W}{S})}{\frac{W}{S} \cdot B} \right]$$

is above 80% and more especially above 90%.

8. The use claimed in claims 1 to 7, characterized in that the guar ethers have been produced by alkalization and etherification of guar in toluene.

## Revendications

1. Utilisation d'éthers de guar non réticulés choisis parmi le groupe comprenant un alkylguar, un hydroxyalkylguar et/ou un alkylhydroxyalkylguar que l'on a préparé par alcalinisation de guar avec de la lessive de soude aqueuse et par alkylation avec des halogénures d'alkyle et/ou des époxyalcanes dans un milieu organique de mise en suspension miscible ou non miscible à l'eau, comme agents de rétention de l'eau dans des mélanges de gypse à réglage fortement alcalin.

2. Forme de réalisation selon la revendication 1, caractérisée en ce que les éthers de guar sont utilisés en quantités de 0,05–2, de préférence, de 0,1–1 et, en particulier, de 0,2–0,5% en poids, calculé sur le mélange de gypse sec, dans des mélanges de gypse.

3. Forme de réalisation selon les revendications 1–2, caractérisée en ce que, comme éthers de guar, on utilise le méthylguar, l'éthylguar, le propylguar, l'hydroxyéthylguar, l'hydroxypropylguar, l'hydroxybutylguar et/ou des éthers mixtes de ces derniers.

4. Forme de réalisation selon les revendications 1–3, caractérisée en ce que le degré de substitution moyen des éthers d'alkylguar ou des éthers d'alkylhydroxyalkylguar se situe entre 0,1 et 1,5, de préférence, entre 0,3 et 1,5.

5. Forme de réalisation selon les revendications 1–4, caractérisée en ce que le degré molaire de substitution des éthers d'hydroxyalkylguar ou des éthers d'hydroxyalkyl-alkylguar est de 0,01–5, en particulier, de 0,2–1.

6. Forme de réalisation selon les revendications 1–5, caractérisée en ce que la viscosité des éthers de guar dans une solution aqueuse à 2% en poids, mesurée avec un viscosimètre de rotation de Brookfield, type RVT, à 20 rotations/minute et à 20°C, s'élève à 4–40 Pas, de préférence, à 5–35 Pas.

7. Forme de réalisation selon les revendications 1–6, caractérisée en ce que le pouvoir de rétention d'eau (WRV), calculé selon la formule

$$\% \ WRV = 100 - \left[ \frac{100A \cdot (1 + \frac{W}{F})}{\frac{W}{F} \cdot B} \right]$$

s'élève à plus de 80%, en particulier, à plus de 90%.

8. Forme de réalisation selon les revendications 1–7, caractérisée en ce que l'on prépare les éthers de guar par alcalinisation et éthérification de guar dans du toluène.